# EUROPEAN PATENT SPECIFICATION

(11) **EP 3 026 328 B1**
(45) Date of publication and mention of the grant of the patent: **07.10.2020**
(21) Application number: 15163837.6
(22) Date of filing: 16.04.2015
(51) Int. Cl.: F21S 43/14, F21S 43/239, F21S 43/245, F21S 43/249

(54) **LIGHT SOURCE MODULE OF LAMP FOR VEHICLE**
LICHTQUELLENMODUL EINER LAMPE FÜR EIN FAHRZEUG
MODULE DE SOURCE LUMINEUSE POUR LA LAMPE D'UN VÉHICULE

(30) Priority: 25.11.2014 KR 20140165153
(43) Date of publication of application: 01.06.2016
(73) Proprietor: Hyundai Motor Company, Seoul 137-938 (KR)
(72) Inventor: Yang, Jeong Gyu, 448-140 Gyeonggi-do (KR)
(74) Representative: Hoffmann Eitle

(56) References cited:
- WO-A1-2014/105470
- KR-A- 20140 078 373
- US-A1- 2013 264 590
- US-A1- 2014 043 819
- US-A1- 2014 043 854

## Description

### TECHNICAL FIELD

The present disclosure relates to a light source module of a lamp for a vehicle, and more particularly, to a light source module constitung a rear combination lamp, which is capable of realizing light emitting images having two patterns with one light source.

### BACKGROUND

A rear combination lamp for a vehicle is mounted to a rear portion of the vehicle. The rear combination lamp includes a back lamp that is turned on when reversing, a brake lamp that is turned on when braking, and a turn signal lamp.

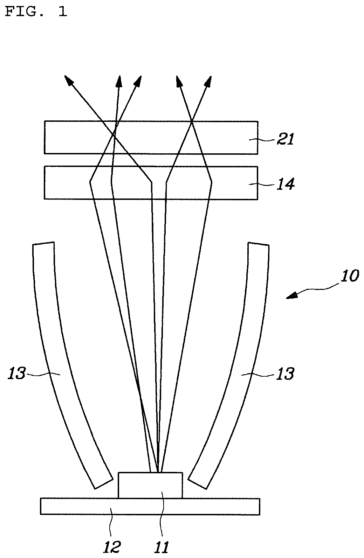

There has been a growing tendency to utilize a rear combination lamp using, as a light source, a light emitting diode (LED) that is prolonged in service life and high in light efficiency. As shown in FIG. 1, a light source module 10 of the conventional rear combination lamp includes an LED light source 11, a PCB substrate 12 controlling supply of an electric current to the LED light source 11, a reflection plate 13 reflecting light emitted from the LED light source 11 towards an outer lens 21, and a light diffusion lens 14 provided in front of the reflection plate 13 to diffuse light from the LED light source 11.

However, the conventional light source module 10 is configured such that the reflection plate 13 is provided in front of the LED light source 11. Thus, this is problematic in that a whole size of an optical system including the LED light source 11 and the outer lens 21 is increased, so that the degree of freedom in design is reduced, a weight is increased, and thereby, manufacturing cost thereof is increased.

Further, the conventional light source module 10 converts the light emitted from the LED light source 11 into a simple light emitting image, such as a dot, a line, or a face. Here, visibility is low, so that the number of LED light sources 11 should be increased to improve the visibility, thus incurring high manufacturing cost.

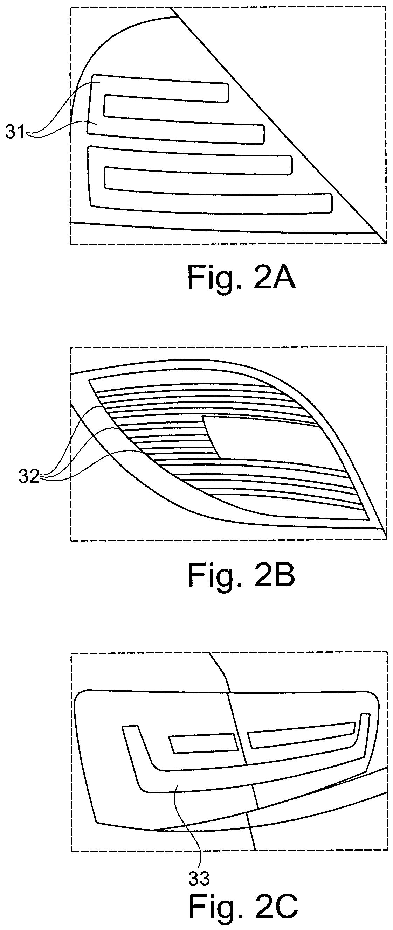

FIGS. 2A to 2C show light emitting images implemented by the conventional light source module 10. FIG. 2A shows a light emitting image 31 in the form of a multi-dot, FIG. 2B shows a light emitting image 31 in the form of a line, and FIG. 2C shows a light emitting image 33 in the form of a face.

Further, the conventional light source module has the following problems: if it has a single light source, it is possible to implement only one kind of pattern image, so that it is impossible to satisfy consumers' desires requiring various designs for the light emitting image. Thus, in order to implement light emitting images having a plurality of patterns, the number of light sources should be increased, so that manufacturing cost as well as a weight is increased and the size of the lamp is inevitably increased.

The foregoing is intended merely to aid in the understanding of the background of the present invention, and is not intended to mean that the present invention falls within the purview of the related art that is already known to those skilled in the art.

Further, US 2014/0043854 A1 discloses an illuminating device which comprises a light guiding unit comprising a protrusion optical pattern forming a gap with an adjacent layer, at least one light emitting unit passing through the light guiding unit, and a resin layer formed on the light guiding unit and the at least one light emitting unit, so it is possible to obtain an effect that the shapes of light change depending on the viewing angle when viewing the light source by producing various protrusion optical patterns, an effect that the whole thickness can be reduced, and an effect that the degree of design freedom can be enhanced when designing products thanks to an enhanced flexibility.

### SUMMARY

The present invention has been made keeping in mind the above problems occurring in the related art, and an aspect of the present invention provides a light source module of a lamp for a vehicle, in which light emitting images having two different patterns are implemented by one light source, thus realizing various designs for the light emitting image and improving marketability.

Another aspect of the present invention provides a light source module of a lamp for a vehicle, which is capable of implementing a bezel image by creating a hidden effect due to light concentration and vapor deposition when a light source is turned off, thus providing an improved effect of the lamp.

Yet another aspect of the present invention provides a light source module of a lamp for a vehicle, in which light emitting images of two patterns can be implemented by one light source, thus reducing manufacturing cost as well as weight, in addition to significantly reducing size of the lamp.

Still another aspect of the present invention provides a light source module of a lamp for a vehicle, in which no additional reflector is provided in front of a light source, thus reducing size and weight of an optical system, in addition to achieving cost savings.

A light source module according to the present invention is defined by the combination of features of claim 1. Dependent claims relate to further embodiments.

According to an exemplary embodiment of the present invention, a light source module of a lamp for a vehicle includes one LED light source. A PCB substrate controls supply of an electric current to the LED light source. A primary pattern film is layered on the PCB substrate and has a first optic protrusion formed thereon. The first optic protrusion implements a first light emitting image having a specific pattern using light of the LED light source. An optical resin is layered on the primary pattern film, and uniformly transmits the light of the LED light source throughout the entire primary pattern film. A secondary pattern film is layered on the optical resin and has a second optic protrusion formed thereon. The second optic protrusion implements a second light emitting image having a specific pattern different from the pattern of the first light emitting image. The first optic protrusion and the second optic protrusion are oriented in different directions from each other, and protrude in opposite directions.

The light source module may further include a reflective film interposed between the PCB substrate and the primary pattern film. The reflective film reflects forwards the light of the LED light source that is scattered backwards when the LED light source is turned on. The reflective film realizes a hidden effect of vapor deposition when the LED light source is turned off.

The light source module may further include an air layer formed between the primary pattern film and the reflective film. The air layer increases reflectivity of the light of the LED light source that penetrates through the primary pattern film and increases light efficiency, thus enhancing sharpness of the first light emitting.

The light source module may further include a bezel integrally coupled along an edge of the optical resin, and implementing a bezel image via the vapor deposition along with the reflective film when the LED light source is turned off.

The primary pattern film may be coupled in such a way that the first optic protrusion protrudes towards the reflective film. The second optic protrusion protrudes towards the outer lens of the lamp, so that the second optic protrusion may be in contact with an air layer between the secondary pattern film and the outer lens.

An angle between an oriented direction of the first optic protrusion and that of the second optic protrusion may be less than 90 degrees to implement a light emitting image formed by overlapping the first light emitting image with the second light emitting image or a light emitting image formed by crossing the first light emitting image and the second light emitting image.

A radiating direction of light output from the LED light source may be perpendicular to the oriented direction of the first optic protrusion and the oriented direction of the second optic protrusion, respectively, to implement a light emitting image formed by overlapping the first light emitting image with the second light emitting image or a light emitting image formed by crossing the first light emitting image and the second light emitting image.

The light source module may be mounted to a lamp housing via a bracket, and the lamp housing may be fixedly mounted to a vehicle body.

The light source module may have a flexible plate shape having a curved surface.

As is apparent from the above description, the light source module of the lamp for the vehicle is advantageous in that the first and second light emitting images having the two different patterns are implemented by the one light source, thus realizing various designs for the light emitting image, and thereby satisfying consumers' desires and improving marketability.

Further, the light source module of the lamp for the vehicle is advantageous in that it is capable of implementing a bezel image by creating the hidden effect due to the vapor deposition by the reflective film and the bezel when the light source is turned off, thus providing the more improved luxurious effect of the lamp.

Furthermore, the light source module of the lamp for the vehicle is advantageous in that the light emitting images of the two patterns can be implemented by the one light source, thus reducing manufacturing cost as well as weight, in addition to significantly reducing size of the lamp.

Further, the light source module of the lamp for the vehicle is advantageous in that no additional reflector is provided in front of the light source, thus reducing the whole size of the optical system including the light source and the lens, and thereby improving the degree of freedom in design and reducing the weight cost.

### BRIEF DESCRIPTION OF THE DRAWINGS

The above and other objects, features and advantages of the present invention will be more clearly understood from the following detailed description taken in conjunction with the accompanying drawings.
FIG. 1 is a view illustrating a conventional light source module of a rear combination lamp for a vehicle.
FIGS. 2A to 2C are views showing light emitting images implemented by the conventional light source module.
FIG. 3 is a view illustrating a light source module of a rear combination lamp for a vehicle according to the present invention.
FIGS. 4 and 5 are views illustrating a primary pattern film and a secondary pattern film according to the present invention.
FIG. 6 is a view illustrating a first light emitting image and a second light emitting image implemented by the light source module according to the present invention.
FIG. 7 is a view showing an image implemented by the rear combination lamp using the light source module according to the present invention.

### DETAILED DESCRIPTION

Hereinbelow, a light source module of a lamp for a vehicle according to exemplary embodiment of the present invention will be described with reference to the accompanying drawings.

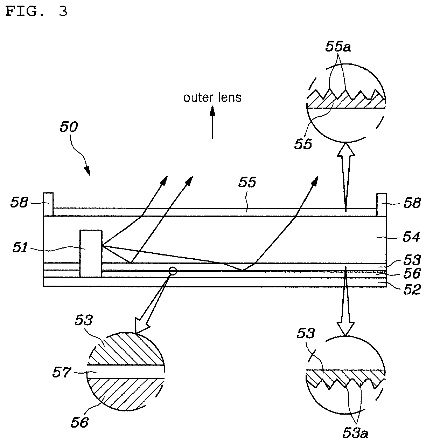

As shown in FIGS. 3 to 7, a light source module 50 of a lamp for a vehicle according to the present invention includes one LED light source 51, a PCB substrate 52, a primary pattern film 53, an optical resin 54, and a secondary pattern film 55. The PCB substrate 52 controls the supply of an electric current to the LED light source 51. The primary pattern film 53 is layered on the PCB substrate 52 and has a first optic protrusion 53a formed thereon. The first optic protrusion 53a provides a first light emitting image 61 having a specific pattern using the light of the LED light source 51. The optical resin 54 is layered on the primary pattern film 53 and uniformly transmits the light of the LED light source 51 towards the entire primary pattern film 53. The secondary pattern film 55 is layered on the optical resin 54 and has a second optic protrusion 55a formed thereon. The second optic protrusion 55a provides a second light emitting image 62 having a specific pattern which is different from the pattern of the first light emitting image 61.

A first end of the LED light source 51 is electrically connected to the PCB substrate 52, while a second end thereof faces to the front at which an outer lens is located. Particularly, the first end is disposed on a side of the first optic protrusion 53a formed on the primary pattern film 53, while the second end is disposed in the optical resin 54.

The optical resin 54 is a medium for transmitting light from the LED light source 51 towards the primary pattern film 53. This allows the light emitted from the LED light source 51 to be induced to the first optic protrusion 53a of the primary pattern film 53, thus improving light efficiency.

The optical resin 54 may use poly methyl methacrylate (PMMA) or ultraviolet-ray (UV) curing resin, without being limited thereto.

The light source module 50 of the present invention further includes a reflective film 56 that is interposed between the PCB substrate 52 and the primary pattern film 53. The reflective film 56 reflects forwards the light of the LED light source 51 that is transmitted through the primary pattern film 53 and scattered backwards when the LED light source 51 is turned on, and realizes a hidden effect of vapor deposition when the LED light source 51 is turned off.

The reflective film 56 is an aluminum-deposited reflective film for increasing the light reflecting efficiency. When the LED light source 51 is turned on, the reflective film 56 serves to reflect forwards the light of the LED light source 51 that is transmitted through the primary pattern film 53 and is scattered backwards. In contrast, when the LED light source 51 is turned off, the reflective film 56 realizes the hidden effect of vapor deposition, thus providing an improved effect of the lamp.

Most of the light emitted from the LED light source 51 is reflected by the first optic protrusion 53a of the primary pattern film 53 to be output to the outer lens which is disposed at a front side of the lamp. However, some of the light may not be reflected by the first optic protrusion 53a but may be scattered to a rear position at which the PCB substrate 52 is located. Thus, the reflective film 56 according to the present invention serves to reflect the light of the LED light source 51, which is scattered backwards, towards the first optic protrusion 53a of the primary pattern film 53 again.

That is, the reflective film 56 according to the present disclosure serves to reflect the light of the LED light source 51, scattered to the rear position at which the PCB substrate 52 is located, towards the first optic protrusion 53a of the primary pattern film 53 again, thus considerably reducing an optical loss due to the scattering of the light, additionally obtaining the quantity of light, and thereby significantly improving the light efficiency of the lamp.

Further, the reflective film 55 realizes the hidden effect of the vapor deposition when the LED light source 51 is turned off, thus aiding in providing the luxurious effect of the lamp.

The light source module 50 according to the present disclosure has a flexible plate shape bent in a curved surface. Here, the secondary pattern film 55 serves to protect the optical resin 54 and to maintain the shape of the optical resin 54 that is bent in the curved surface.

Further, the light source module 50 according to the present invention further includes an air layer 57 that is formed between the primary pattern film 53 and the reflective film 56. The air layer 57 increases the reflectivity of the light of the LED light source 51 that has penetrated through the primary pattern film 53, thereby increasing light efficiency and enhancing the sharpness of the first light emitting image 61.

The light source module 50 according to the present invention may further include a bezel 58 that is integrally coupled along an edge of the optical resin 54. The bezel 58 creates a bezel image via vapor deposition along with the reflective film 56 when the LED light source 51 is turned off.

The bezel 58 creates a bezel image 64 by the vapor deposition along with the reflective film 56 along the edge of the lamp when the LED light source 51 is turned off, thus providing the more improved luxurious effect of the lamp.

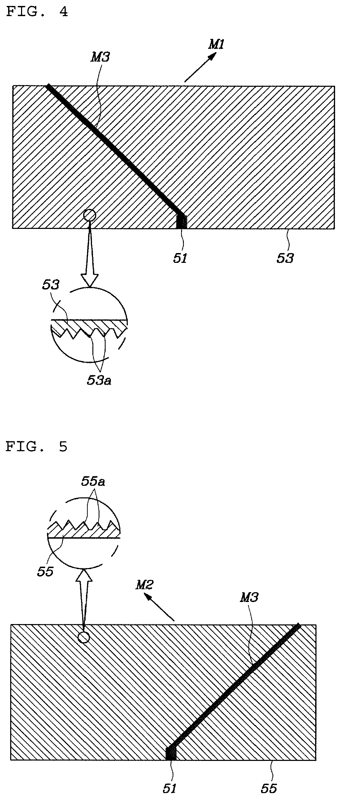

According to the present invention, an oriented direction M1 of the first optic protrusion 53a is different from an oriented direction M2 of the second optic protrusion 55a as shown in FIGS. 4 and 5. Further, the protruding directions of the optic protrusions 53a and 55a are opposite to each other. This can provide two different kinds of first and second light emitting images 61 and 62 using one LED light source 51 with the primary pattern film 53 and the secondary pattern film 55 stacked on each other.

To be more specific, the primary pattern film 53 is coupled in such a way that the first optic protrusion 53a protrudes towards the reflective film 56. The secondary pattern film 55 is coupled in such a way that the second optic protrusion 55a protrudes towards the outer lens of the lamp, so that the second optic protrusion 55a is in contact with the air layer between the secondary pattern film 56 and the outer lens.

As the second optic protrusion 55a is also in contact with the air layer, the light of the LED light source 51 that has penetrated through the secondary pattern film 55 increases the light efficiency, and thereby the sharpness of the second light emitting image 62 is also improved significantly.

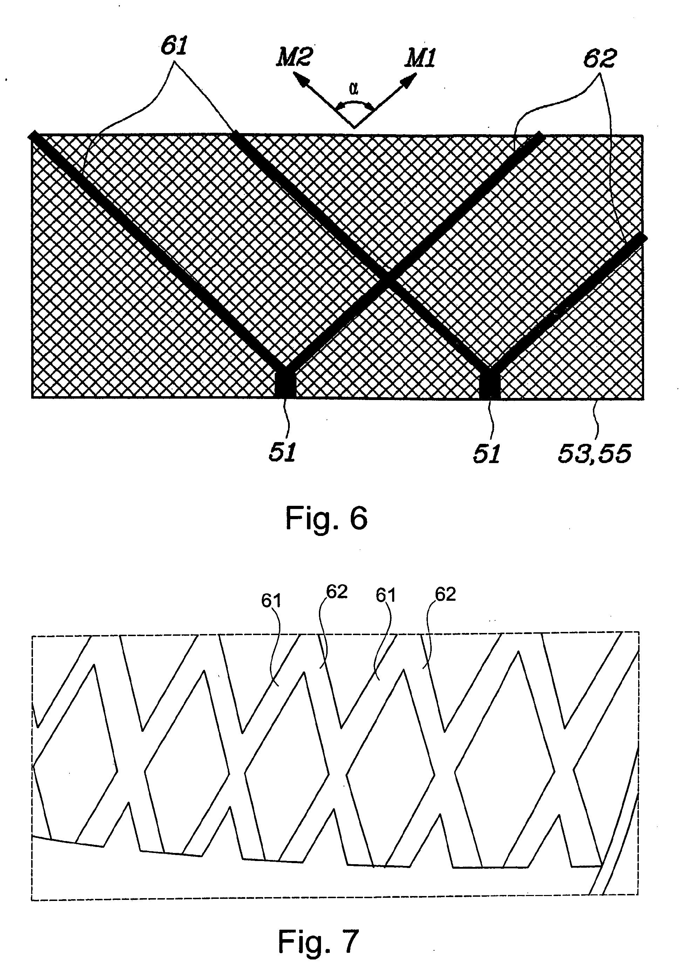

In order to implement a light emitting image formed by overlapping the first light emitting image 61 with the second light emitting image 62 or a light emitting image formed by crossing the first light emitting image 61 and the second light emitting image 62 as shown in FIGS. 6 and 7, an angle α between the oriented direction M1 of the first optic protrusion 53a and the oriented direction M2 of the second optic protrusion 55a may be less than 90 degrees. Further, a radiating direction M3 of light output from the LED light source 51 is perpendicular to the oriented direction M1 of the first optic protrusion 53a and the oriented direction M2 of the second optic protrusion 55a, respectively.

The light source module 50 according to the present invention configured as described above is mounted to a lamp housing via a bracket, and the lamp housing can be fixedly mounted to a vehicle body.

As described above, the present invention provides a light source module of a lamp for a vehicle, in which first and second light emitting images having two different kinds of patterns are implemented by one light source, thus realizing various designs for a light emitting image and thereby satisfying consumers' desires and improving marketability.

Further, the present invention provides a light source module of a lamp for a vehicle, in which it is capable of implementing a bezel image by creating a hidden effect due to vapor deposition by a reflective film and a bezel when a light source is turned off, thus providing a more improved luxurious effect of the lamp.

Furthermore, the present invention provides a light source module of a lamp for a vehicle, in which light emitting images of two patterns can be implemented by one light source, thus reducing manufacturing cost as well as a weight, in addition to significantly reducing the size of the lamp.

Further, the present invention provides a light source module of a lamp for a vehicle, which is configured such that no additional reflector is provided in front of a light source, thus reducing the whole size of an optical system including the light source and a lens, and thereby improving the degree of freedom in design, reducing a weight, and in addition, achieving cost savings.

Although exemplary embodiments of the present invention have been disclosed for illustrative purposes, those skilled in the art will appreciate that various modifications, additions and substitutions are possible, without departing from the scope of the invention as disclosed in the accompanying claims.

## Claims

1. A light source module of a lamp for a vehicle, comprising:
one LED light source (51);
a PCB substrate (52) controlling supply of an electric current to the LED light source (51);
a primary pattern film (53) layered on the PCB substrate (52) and having a first optic protrusion (53a) formed thereon, the first optic protrusion (53a) providing a first light emitting image (61) having a specific pattern using the light of the LED light source (51);
an optical resin (54) layered on the primary pattern film (53), and uniformly transmitting the light of the LED light source (51) towards the entire primary pattern film (53); and
a secondary pattern film (55) layered on the optical resin (54) and having a second optic protrusion (55a) formed thereon,
**characterized in that**:
the second optic protrusion (55a) is configured to provide a second light emitting image (62) having a specific pattern different from the pattern of first light emitting image (61),
wherein the first optic protrusion (53a) and the second optic protrusion (55b) of the primary and second pattern films are oriented in different directions (M1, M2) from each other, and protrude in opposite directions.

2. The light source module as set forth in claim 1, further comprising:
a reflective film (56) interposed between the PCB substrate (52) and the primary pattern film (53), the reflective film (56) reflecting forwards the light of the LED light source (51) that is transmitted through the primary pattern film (53) and scattered backwards when the LED light source (51) is turned on, the reflective film (56) realizing a hidden effect of vapor deposition when the LED light source (51) is turned off.

3. The light source module as set forth in claim 2, further comprising:
an air layer (57) formed between the primary pattern film (53) and the reflective film (56), the air layer (57) increasing reflectivity of the light of the LED light source (51) that is transmitted through the primary pattern film (53) and increasing light efficiency, thus enhancing sharpness of the first light emitting.

4. The light source module as set forth in any one of the preceding claims, further comprising:
a bezel (58) integrally coupled along an edge of the optical resin (54), and implementing a bezel image via the effect of vapor deposition along with the reflective film (56) when the LED light source is turned off.

5. The light source module as set forth in any one of the preceding claims, wherein the primary pattern film (53) is coupled in such a way that the first optic protrusion (53a) protrudes towards the reflective film (56), and
the second optic protrusion (55a) protrudes towards an outer lens of the lamp, so that the second optic protrusion (55a) is in contact with an air layer between the secondary pattern film (55) and the outer lens.

6. The light source module as set forth in any one of the preceding claims, wherein an angle between an oriented direction (M1) of the first optic protrusion (53a) and that (M2) of the second optic protrusion (55a) is less than 90 degrees to provide a light emitting image formed by overlapping the first light emitting image with the second light emitting image or a light emitting image formed by crossing the first light emitting image and the second light emitting image.

7. The light source module as set forth in any one of claims 1 to 5, wherein a radiating direction of the light output from the LED light source (51) is perpendicular to an oriented direction (M1) of the first optic protrusion (53a) and the oriented direction (M2) of the second optic protrusion (55a), respectively, to provide a light emitting image formed by overlapping the first light emitting image with the second light emitting image or a light emitting image formed by crossing the first light emitting image and the second light emitting image.

8. The light source module as set forth in any one of the preceding claims, wherein the light source module (51) is mounted to a lamp housing via a bracket, and
the lamp housing can be fixedly mounted to a vehicle body.

9. The light source module as set forth in any one of the preceding claims, wherein the light source module (51) has a flexible plate shape and is bent in a curved surface.

10. The light source module as set forth in any one of the preceding claims, wherein the outer lens is disposed at a front side of the lamp.

## Patentansprüche

1. Lichtquellenmodul einer Lampe für ein Fahrzeug, umfassend:
eine LED-Lichtquelle (51);
ein PCB-Substrat (52), das die Zufuhr eines elektrischen Stroms zu der LED-Lichtquelle (51) steuert;
eine Folie mit einer primären Struktur (53), die auf dem PCB-Substrat (52) geschichtet ist und einen ersten darauf ausgebildeten optischen Vorsprung (53a) aufweist, wobei der erste optische Vorsprung (53a) ein erstes lichtemittierendes Bild (61), das eine spezifische Struktur aufweist, unter Verwendung des Lichts der LED-Lichtquelle (51) bereitstellt;
ein optisches Harz (54), das auf der Folie mit einer primären Struktur (53) geschichtet ist und das Licht der LED-Lichtquelle (51) gleichmäßig in Richtung der gesamten Folie mit einer primären Struktur (53) durchlässt; und
eine Folie mit einer sekundären Struktur (55), die auf dem optischen Harz (54) geschichtet ist und auf der ein zweiter optischer Vorsprung (55a) ausgebildet ist,
**dadurch gekennzeichnet, dass**:
der zweite optische Vorsprung (55a) konfiguriert ist, um ein zweites lichtemittierendes Bild (62) bereitzustellen, das eine spezifische Struktur aufweist, die sich von der Struktur des ersten lichtemittierenden Bildes (61) unterscheidet,
wobei der erste optische Vorsprung (53a) und der zweite optische Vorsprung (55b) der Folien mit einer ersten und einer zweiten Struktur in unterschiedliche Richtungen (M1, M2) voneinander orientiert sind und in entgegengesetzte Richtungen vorstehen.

2. Lichtquellenmodul nach Anspruch 1, weiter umfassend:
eine reflektierende Folie (56), die zwischen dem PCB-Substrat (52) und der Folie mit einer primären Struktur (53) eingebracht ist, wobei die reflektierende Folie (56) das Licht der LED-Lichtquelle (51), das durch die Folie mit einer primären Struktur (53) durchgelassen und rückwärts gestreut wird, wenn die LED-Lichtquelle (51) eingeschaltet ist, nach vorne reflektiert, wobei die reflektierende Folie (56) einen ausgeblendeten Effekt einer Aufdampfung realisiert, wenn die LED-Lichtquelle (51) ausgeschaltet ist.

3. Lichtquellenmodul nach Anspruch 2, weiter umfassend:
eine Luftschicht (57), die zwischen der Folie mit einer primären Struktur (53) und der reflektierenden Folie (56) ausgebildet ist, wobei die Luftschicht (57) das Reflexionsvermögen des Lichts der LED-Lichtquelle (51) erhöht, das durch die Folie mit einer primären Struktur (53) durchgelassen wird, und die Lichteffizienz erhöht, wodurch die Schärfe das erste lichtemittierende verbessert wird.

4. Lichtquellenmodul nach einem der vorstehenden Ansprüche, weiter umfassend:
eine Blende (58), die integral entlang einer Kante des optischen Harzes (54) gekoppelt ist und ein Blendenbild über den Effekt einer Aufdampfung zusammen mit der reflektierenden Folie (56) implementiert, wenn die LED-Lichtquelle ausgeschaltet ist.

5. Lichtquellenmodul nach einem der vorstehenden Ansprüche, wobei die Folie mit einer primären Struktur (53) so gekoppelt ist, dass der erste optische Vorsprung (53a) in Richtung der reflektierenden Folie (56) vorsteht, und
der zweite optische Vorsprung (55a) in Richtung einer Außenlinse der Lampe vorsteht, so dass der zweite optische Vorsprung (55a) mit einer Luftschicht zwischen der Folie mit einer sekundären Struktur (55) und der Außenlinse in Kontakt ist.

6. Lichtquellenmodul nach einem der vorstehenden Ansprüche, wobei ein Winkel zwischen einer orientierten Richtung (M1) des ersten optischen Vorsprungs (53a) und der (M2) des zweiten optischen Vorsprungs (55a) weniger als 90 Grad beträgt, um ein lichtemittierendes Bild, das durch Überlappen des ersten lichtemittierenden Bildes mit dem zweiten lichtemittierenden Bild gebildet wird, oder ein lichtemittierendes Bild, das durch Kreuzen des ersten lichtemittierenden Bildes und des zweiten lichtemittierenden Bildes gebildet wird, bereitzustellen.

7. Lichtquellenmodul nach einem der Ansprüche 1 bis 5, wobei eine Strahlungsrichtung des von der LED-Lichtquelle (51) ausgegebenen Lichts senkrecht zu einer orientierten Richtung (M1) des ersten optischen Vorsprungs (53a) bzw. der orientierten Richtung (M2) des zweiten optischen Vorsprungs (55a) ist, um ein lichtemittierendes Bild, das durch Überlappen des ersten lichtemittierenden Bilds mit dem zweiten lichtemittierenden Bild gebildet wird, oder ein lichtemittierendes Bild, das durch Kreuzen des ersten lichtemittierenden Bilds und des zweiten lichtemittierenden Bilds gebildet wird, bereitzustellen.

8. Lichtquellenmodul nach einem der vorstehenden Ansprüche, wobei das Lichtquellenmodul (51) über eine Halterung an einem Lampengehäuse montiert ist und
das Lampengehäuse fest an einer Fahrzeugkarosserie montiert werden kann.

9. Lichtquellenmodul nach einem der vorstehenden Ansprüche, wobei das Lichtquellenmodul (51) eine flexible Plattenform aufweist und in einer gekrümmten Oberfläche gebogen ist.

10. Lichtquellenmodul nach einem der vorstehenden Ansprüche, wobei die äußere Linse an einer Vorderseite der Lampe angeordnet ist.

## Revendications

1. Module de source lumineuse d'une lampe pour un véhicule, comprenant :
une source lumineuse à DEL (51) ;
un substrat de PCB (52) commandant une alimentation d'un courant électrique à la source lumineuse à DEL (51) ;
un film à motif primaire (53) stratifié sur le substrat de PCB (52) et présentant une première saillie optique (53a) formée sur celui-ci, la première saillie optique (53a) fournissant une première image électroluminescente (61) présentant un motif spécifique en utilisant la lumière de la source lumineuse à DEL (51) ;
une résine optique (54) stratifiée sur le film à motif primaire (53), et transmettant uniformément la lumière de la source lumineuse à DEL (51) en direction du film à motif primaire (53) complet ; et
un film à motif secondaire (55) stratifié sur la résine optique (54) et présentant une seconde saillie optique (55a) formée sur celui-ci,
**caractérisé en ce que** :
la seconde saillie optique (55a) est configurée pour fournir une seconde image électroluminescente (62) présentant un motif spécifique différent du motif de la première image électroluminescente (61),
dans lequel la première saillie optique (53a) et la seconde saillie optique (55b) des films à motif primaire et secondaire sont orientées dans des sens différents (M1, M2) l'un de l'autre, et sont saillantes dans des sens opposés.

2. Module de source lumineuse selon la revendication 1, comprenant en outre :
un film réfléchissant (56) interposé entre le substrat de PCB (52) et le film à motif primaire (53), le film réfléchissant (56) réfléchissant vers l'avant la lumière de la source lumineuse à DEL (51) qui est transmise à travers le film à motif primaire (53) et dispersée vers l'arrière lorsque la source lumineuse à DEL (51) est activée, le film réfléchissant (56) réalisant un effet caché de dépôt en phase vapeur lorsque la source lumineuse à DEL (51) est désactivée.

3. Module de source lumineuse selon la revendication 2, comprenant en outre :
une couche d'air (57) formée entre le film à motif primaire (53) et le film réfléchissant (56), la couche d'air (57) augmentant une réflectivité de la lumière de la source lumineuse à DEL (51) qui est transmise à travers le film à motif primaire (53) et augmentant un rendement lumineux, en améliorant ainsi une netteté de la première émission de lumière.

4. Module de source lumineuse selon l'une quelconque des revendications précédentes, comprenant en outre :
une lunette (58) couplée intégralement le long d'un bord de la résine optique (54), et mettant en œuvre une image de lunette par l'intermédiaire de l'effet de dépôt en phase vapeur avec le film réfléchissant (56) lorsque la source lumineuse à DEL est désactivée.

5. Module de source lumineuse selon l'une quelconque des revendications précédentes, dans lequel le film à motif primaire (53) est couplé de telle manière que la première saillie optique (53a) soit saillante en direction du film réfléchissant (56), et
la seconde saillie optique (55a) est saillante en direction d'une lentille extérieure de la lampe, de sorte que la seconde saillie optique (55a) soit en contact avec une couche d'air entre le film à motif secondaire (55) et la lentille extérieure.

6. Module de source lumineuse selon l'une quelconque des revendications précédentes, dans lequel un angle entre un sens d'orientation (M1) de la première saillie optique (53a) et un sens d'orientation (M2) de la seconde saillie optique (55a) soit inférieur à 90 degrés pour fournir une image électroluminescente formée par le chevauchement de la première image électroluminescente avec la seconde image électroluminescente ou une image électroluminescente formée par le croisement de la première image électroluminescente et de la seconde image électroluminescente.

7. Module de source lumineuse selon l'une quelconque des revendications 1 à 5, dans lequel un sens de rayonnement de la lumière délivrée depuis la source lumineuse à DEL (51) est perpendiculaire à un sens d'orientation (M1) de la première saillie optique (53a) et au sens d'orientation (M2) de la seconde saillie optique (55a), respectivement, pour fournir une image électroluminescente formée par le chevauchement de la première image électroluminescente avec la seconde image électroluminescente ou une image électroluminescente formée par le croisement de la première image électroluminescente et de la seconde image électroluminescente.

8. Module de source lumineuse selon l'une quelconque des revendications précédentes, dans lequel la source lumineuse à DEL (51) est montée sur un boîtier de lampe par l'intermédiaire d'un support, et
le boîtier de lampe peut être monté fixement sur une carrosserie de véhicule.

9. Module de source lumineuse selon l'une quelconque des revendications précédentes, dans lequel le module de source lumineuse (51) présente une forme de plaque souple et est plié dans une surface incurvée.

10. Module de source lumineuse selon l'une quelconque des revendications précédentes, dans lequel la lentille extérieure est disposée au niveau d'un côté avant de la lampe.
